# EUROPÄISCHE PATENTANMELDUNG

(11) **EP 4 088 569 A1**
(43) Veröffentlichungstag der Anmeldung: **16.11.2022**
(21) Anmeldenummer: 21173661.6
(22) Anmeldetag: 12.05.2021
(51) Int. Cl.: A01K 15/02

(54) **PARCOURS FÜR VIERBEINIGE TIERE, INSBESONDERE FÜR PFERDE**

(71) Anmelder: Holz- und Möbelmanufaktur Schraft GmbH, 75394 Oberkollbach (DE)
(72) Erfinder: Schraft, Boris, 75394 Igelsloch (DE)
(74) Vertreter: Witte, Weller & Partner Patentanwälte mbB

(57) **Zusammenfassung**

Die Erfindung schlägt vor, einen Parcours für insbesondere Pferde modular aus Podesten (1, 2) unterschiedlicher Höhe aufzubauen, die in einem Abstand voneinander angeordnet werden, der mit Längsträgern (3) überbrückt wird, auf die Laufelemente (4, 5) aufgelegt werden.

## Beschreibung

Die Erfindung betrifft einen mobilen, modularen Parcours für vierbeinige Tiere wie Hunde oder Pferde und insbesondere für Pferde mit den Merkmalen des Oberbegriffs des Anspruchs 1.

"Modular" bedeutet, dass der Parcours von ein oder zwei Personen in Einzelteile, Elemente, Baugruppen oder dergleichen zerlegbar ist, die von der einen oder den beiden Personen tragbar, aufstellbar, zerlegbar und transportfähig verladebar sind. "Mobil" bedeutet, dass die Einzelteile, Elemente, Baugruppen oder dergleichen des Parcours mit beispielsweise einem Kleintransporter, der als Personenkraftwagen zugelassen ist, einem Transporter mit einem zulässigen Gesamtgewicht von 7,5 Tonnen, in einem Pferdeanhänger oder einem Anhänger vergleichbarer Größe transportiert werden können. Möglich ist auch der Transport in einem normalen Personenkraftwagen.

Der Parcours ist ein künstlicher, erhöhter Laufweg für das vierbeinige Tier, der beispielsweise ungefähr so breit wie ein Körper des Tiers ist. "Erhöht" bedeutet, dass der Laufweg erhöht über einem Boden ist, auf dem der Parcours aufgestellt ist oder aufgestellt wird.

Das Patent DE 10 2016 002 776 B4 offenbart ein Spiel- und Trainingsgerät für Haustiere, insbesondere für Hunde, mit einer rechteckigen Platte, auf der das Tier gehen kann und die Lochsockel für Steckstandfüßen aufweist, mit denen die Platte erhöht auf einem Boden aufstellbar ist. Die Platte lässt sich mit beispielsweise vier oder sechs Steckstandfüßen horizontal, das heißt parallel zum Boden oder mit zwei Steckstandfüßen in einer Längsmitte der Platte als Wippe auf dem Boden aufstellen. Steckstandfüßen unterschiedlicher Länge ermöglichen eine Aufstellung der Platte in unterschiedlichen Höhen über dem Boden.

Aufgabe der Erfindung ist einen mobilen, modularen Parcours für vierbeinige Tiere vorzuschlagen, der sich in einer für das Tier, auch wenn das Tier ein Pferd oder ein noch schwereres Tier ist, ausreichenden Stabilität ausführen lässt.

Diese Aufgabe wird durch die Merkmale des Anspruchs 1 gelöst. Die Unteransprüche haben vorteilhafte Ausgestaltungen und Weiterbildungen der Erfindung zum Gegenstand.

Der erfindungsgemäße Parcours ist modular, das heißt er ist von ein oder zwei Personen aufstellbar, zerlegbar und transportfähig verladebar, und er ist mobil, das heißt seine Einzelteile sind beispielsweise mit einem als Personenkraftwagen zugelassenen Kleintransporter, einem Transporter mit einem zulässigen Gesamtgewicht von 7,5 Tonnen, in einem Pferdeanhänger oder einem Anhänger vergleichbarer Größe transportierbar. Möglich ist auch ein Transport in einem normalen Personenkraftwagen. Der Parcours weist Wegelemente, die von einem vierbeinigen Tier wie einem Hund oder Pferd, insbesondere von einem Pferd begehbar sind, und Stützen, an denen die Wegelemente lösbar befestigt sind, auf. Die Stützen sind selbststehende Podeste, die sich auf einen Boden stellen lassen und ohne Abspannung mit Seilen, Gurten oder dergleichen und ohne Stützen oder dergleichen stabil stehen ohne umzufallen, wenn sie von dem Tier begangen werden. Die Podeste halten die Wegelemente erhöht etwa 10 Zentimeter, 15 Zentimeter oder einige 10 Zentimeter über dem Boden, auf den sie gestellt sind. Gemeint ist die Höhe einer Trittfläche, auf der das Tier läuft.

Der erfindungsgemäße Parcours hat den Vorteil, dass er von einer oder zwei Personen ohne Hub- oder Hebegeräte aufgestellt und auch wieder abgebaut, transportfähig verladen und beispielsweise in einem Kleintransporter, der als PKW zugelassen ist, einem Transporter mit einem zulässigen Gesamtgewicht von 7,5 Tonnen, in einem Pferdeanhänger oder einem Anhänger vergleichbarer Größe transportiert werden kann. Ein weiterer Vorteil ist, dass der Parcours, also der Verlauf des erhöhten Laufwegs für das Tier, in seiner Richtung und/oder Höhe verändert werden kann. Einzelteile, Elemente oder Baugruppen des Parcours, in die der Parcours zerlegt werden kann, können von einer oder zwei Personen getragen werden.

Die Wegelemente können horizontal, das heißt parallel zu dem Boden, auf dem die Podeste aufgestellt sind, sozusagen als Stege oder Brücken, oder schräg als Rampen aufgestellt werden. Unterschiedliche Höhen sind möglich, indem die Wegelemente lösbar in unterschiedlichen Höhen an den Podesten befestigbar sind. Eine Ausgestaltung der Erfindung sieht Podeste mit unterschiedlichen Höhen zur Anordnung der Wegelemente in unterschiedlichen Höhen über dem Boden, auf den die Podeste gestellt sind, vor. Die Wegelemente werden lösbar beispielsweise als Stege oder Brücken an zwei in einem Abstand voneinander aufgestellten Podesten befestigt, so dass sie den Abstand zwischen den beiden Podesten überbrücken. Oder die Wegelemente werden lösbar schräg als Rampen an einem Podest befestigt, so dass sie schräg vom Boden nach oben zu dem Podest oder von einem Podest zu einem Podest mit einer anderen Höhe verlaufen. Eine andere Anordnung der Wegelemente schließt die Erfindung nicht aus.

Für eine stabile, modulare Ausbildung der Wegelemente sieht eine Ausgestaltung der Erfindung einen Längsträger vor, der sich bei aufgestelltem Parcours von einem Podest zu einem in einem Abstand aufgestellten Podest erstreckt und der lösbar an den beiden Podesten befestigt ist. Auf dem Längsträger liegt ein plattenförmiges Laufelement auf, das von dem Tier begehbar ist. Vorzugsweise weist das Wegelement zwei oder auch mehr Längsträger auf, die mit - gegebenenfalls auch ohne - Abstand nebeneinander angeordnet sind. Diese Ausgestaltung der Erfindung ermöglicht stabile Wegelemente, die sich über mehrere Meter erstrecken können und beispielsweise einem Pferd stand halten und die trotzdem von einer oder zwei Personen zerlegt, getragen und transportfähig verladen werden können.

Um unterschiedliche große Abstände zwischen zwei Podesten überbrücken zu können sieht eine Weiterbildung unterschiedlich lange Längsträger vor, die wahlweise verwendbar sind. Zwischen zwei Podesten werden gleich lange Längsträger angeordnet, es sei denn die beiden Podeste sind schräg zueinander angeordnet um eine Richtung des Laufwegs zu ändern. Auf die Längsträger werden mehrere, gleiche Laufelemente in Richtung von einem zu einem anderen Podest hintereinander aufgelegt, die den Abstand zwischen den beiden Podesten lückenlos oder mit Spalten von maximal 1 cm oder 2 cm und nicht mehr als 5 cm überbrücken. Ein Längenunterschied zwischen unterschiedlich langen Längsträgern beträgt ein Einfaches oder ganzzahliges Mehrfaches einer Länge oder - wenn die Laufelemente längs und quer auf die Längsträger auflegbar sind - einer Breite der Laufelemente.

Eine bevorzugte Ausgestaltung der Erfindung sieht eine Ausführung der Podeste als räumliche Fachwerke mit Stützen, Längsverbindern und Querträgern vor, die insbesondere rechtwinklig zueinander angeordnet sind. Für eine größere Standfestigkeit können die Stützen auch schräg nach unten auseinander verlaufen, wobei "unten" die Richtung meint, in der sich der Boden befindet, wenn die Stützen wie vorgesehen auf den Boden gestellt sind. Zu einer Erhöhung der Stabilität können die räumlichen Fachwerke beispielsweise diagonale Verstrebungen, plattenförmige Ausfachungen oder Versteifungen beispielsweise auch aus Holz nach Art von Knotenblechen aufweisen.

Für zwei oder mehr nebeneinander angeordnete Längsträger von Wegelementen sieht eine Ausgestaltung der Erfindung eine entsprechende Anzahl an Aufnahmen für die (Enden) der Längsträger in den Abständen voneinander, die die Längsträger voneinander aufweisen sollen, an den Podesten vor. Die Aufnahmen an den Protesten sind insbesondere symmetrisch zu einer Breite der Podeste quer zu dem Laufweg, den der Parcours bildet, angeordnet und die Aufnahmen sind vorzugsweise so angeordnet, dass sich zwei äußere Längsträger an oder nahe an Rändern der lösbar auf ihnen aufliegenden, plattenförmigen Laufelemente befinden. Dadurch stehen die Laufelemente nicht oder nur wenig seitlich nach außen über die Längsträger über, damit sie nicht kippen, wenn sie ohne Lastausgleich nur an einem Rand betreten werden.

Eine Weiterbildung der Erfindung sieht zwei Paare von Aufnahmen für die (Enden) der Längsträger an den Podesten vor, deren Abstand voneinander einer Länge und einer Breite der Laufelemente entspricht, so dass die Laufelemente für einen breiteren Laufweg quer und für einen schmaleren Laufweg längs auf die Längsträger aufgelegt werden können.

Eine Ausgestaltung der Erfindung sieht ein Wegelement mit zueinander schrägen enden vor, das lösbar an zwei schräg in einem entsprechenden Winkel und in einem Abstand voneinander aufgestellten Podesten befestigbar ist. Mit diesem Wegelement ist eine Änderung der Richtung des Laufwegs des Parcours möglich.

Eine Ausgestaltung der Erfindung sieht eine Wippstütze vor, auf die ein Wegelement in seiner Mitte oder auch außermittig als Wippe auflegbar ist.

Sämtliche in der Beschreibung genannte und/oder der Zeichnung dargestellte Merkmale können einzeln für sich oder in jeder beliebigen Kombination bei Ausführungen der Erfindung verwirklicht sein. Ausführungen der Erfindung, die nicht alle, sondern nur einen Teil der Merkmale eines Anspruchs, auch des unabhängigen Anspruchs, aufweisen, sind möglich.

Die Erfindung wird nachfolgend anhand eines in der Zeichnung dargestellten Ausführungsbeispiels näher erläutert. Es zeigen:
- Figur 1: Einzelteile eines erfindungsgemäßen Parcours für ein vierbeiniges Tier, hierfür ein Pferd;
- Figur 2: ein erstes Aufstellbeispiel des erfindungsgemäßen Parcours;
- Figur 3: ein zweites Aufstellbeispiel des erfindungsgemäßen Parcours; und
- Figur 4: eine Wippe des erfindungsgemäßen Parcours.

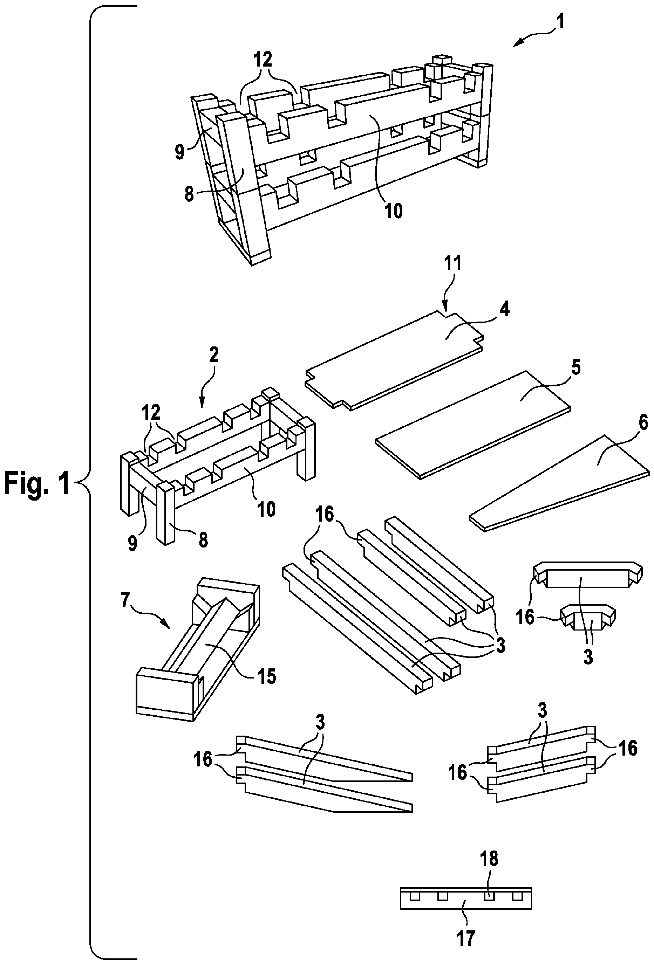

Figur 1 zeigt Einzelteile eines erfindungsgemäßen Parcours für vierbeinige Tiere wie Hunde oder Pferde in perspektivischer Darstellung. Im Ausführungsbeispiel ist der Parcours für Pferde vorgesehen. Der Parcours weist Podeste 1, 2 als Stützen, Längsträger 3 unterschiedlicher Länge, und rechteckige Platten als Laufelemente 4, 5 auf. Im Ausführungsbeispiel weist der Parcours eine Platte mit der Form eines symmetrischen Trapez, die so breit wie die rechteckigen Platten ist, als zusätzliches Laufelement 6, und eine Wippstütze 7 auf. Weitere Einzelteile schließt die Erfindung nicht aus. Es sind unterschiedlich lange Längsträger 3 vorhanden, wobei jeweils zwei gleich lange Längsträger 3 als Paar vorhanden sind.

Die Podeste 1, 2 sind im Ausführungsbeispiel als rechtwinklige, räumliche Fachwerke mit vier zueinander parallelen Stützen 8, die an Ecken eines gedachten Rechtecks angeordnet sind und die mit Längsverbindern 9 und Querträgern 10 starr verbunden sind, ausgebildet. Im Ausführungsbeispiel sind die Podeste 1, 2 in ihre Einzelteile, das heißt in die Stützen 8, die Längsverbinder 9 und die Querträger 10 zerlegbar, um sie mit wenig Platzbedarf transportieren zu können. Im Ausführungsbeispiel sind die Längsverbinder 9 kürzer als die Querträger 10, die Podeste 1, 2 werden quer zu einer Laufrichtung angeordnet. Die Podeste 1, 2 sind selbststehend, sie fallen nicht um, wenn sie auf einen Boden gestellt sind und benötigen keine Abspannung, Abstützung oder dergleichen, um stabil und kippsicher auf dem Boden zu stehen.

Im Ausführungsbeispiel weist der Parcours Podeste 1, 2 mit zwei unterschiedlichen Höhen auf, im Ausführungsbeispiel ist ein Podest 1 doppelt so hoch wie ein anderes Podest 2. Podeste mit weiteren Höhen oder Podeste 1, 2 mit anderem Höhenverhältnis sind möglich.

Auf jedes Podest 1, 2 wird ein rechteckiges Laufelement 4 aufgelegt, das im Ausführungsbeispiel Aussparungen 11 mit der Form eines Querschnitts der Stützen 8 an seinen vier Ecken aufweist, die ungefähr um eine Dicke des Laufelements 4 über die Längsverbinder 9 und die Querträger 10 nach oben überstehen. Das Laufelement 4 liegt dadurch sicher gegen eine Verschiebung in einer Längsrichtung und in einer Querrichtung zwischen den Stützen 8 auf den Längsverbindern 9 und den Querträgern 10 auf. Im Ausführungsbeispiel weisen die Stützen 8 quadratische Querschnitte auf und die Aussparungen 11 an den vier Ecken des Laufelements 4 sind ebenso quadratisch.

Die Längsträger 3 sind im Ausführungsbeispiel Balken mit rechteckigem Querschnitt, die horizontal oder schräg und mit stehendem Querschnitt angeordnet werden, das heißt mit ihren längeren Querschnittsseiten vertikal. An ihren Enden weisen die Längsträger 3 Zapfen 16 zu ihrer Befestigung an den Podesten 1, 2 auf.

Die Querträger 10 der Podeste 1, 2 weisen Aussparungen mit dem Querschnitt der Zapfen 16 der Längsträger 3 als Aufnahmen 12 für die Längsträger 3 beziehungsweise deren Zapfen 16 auf. Es werden jeweils zwei Podeste 1, 2 in einem Abstand voneinander angeordnet, so dass die Zapfen 16 an den Enden der Längsträger 3 in die Aufnahmen 12 einlegbar sind. Die Querträger 10 weisen zwei Paare von Aufnahmen 12 auf, die symmetrisch zu einer Mitte der Querträger 10 in den Querträgern 10 angebracht sind und einen Abstand voneinander aufweisen, der einer Länge und einer Breite der Laufelemente 5 entspricht. Dadurch können für einen schmalen Laufweg zwei gleich lange Längsträger 3 in innere Aufnahmen 12 der Querträger 10 der Podeste 1, 2 eingelegt und Laufelemente 5 längs auf die Längsträger 3 aufgelegt oder für einen breiten Laufweg zwei gleich lange Längsträger 3 in äußere Aufnahmen 12 der Querträger 10 der Podeste 1, 2 eingelegt und die Laufelemente 5 quer auf die Längsträger 3 aufgelegt werden. Die Laufelemente 5, die auf die Längsträger 3 aufgelegt werden, weisen keine Aussparungen an ihren Ecken auf.

Die Längsträger 3 weisen Längen auf, die einem Einfachen oder einem ganzzahligen Mehrfachen der Länge oder der Breite der Laufelemente 5 zuzüglich eines Überstands der Längsträger 3 über die aufgelegten Laufelemente 5 zum Einlegen in die Aufnahmen 12 der Querträger 10 der Podeste 1, 2 an beiden Enden der Längsträger 3 entsprechen.

Die in den Aufnahmen 12 der Querträger 10 der Podeste 1, 2 einliegenden Enden der Längsträger 3 und die auf den Längsträgern 3 aufliegenden Laufelemente 5 werden mit nicht dargestellten Schrauben und auf die Schrauben aufgeschraubten Sternmuttern miteinander verbunden. Die Schrauben werden durch Löcher gesteckt, die die Enden der Längsträger 3 und die Querträger 10 der Podeste 1, 2 an den Aufnahmen 12 und durch Löcher, die Laufelemente 5 und die Längsträger durchsetzen.

Die Längsträger 3 das oder die aufliegenden Laufelemente 5 bilden ein Wegelement 13 des erfindungsgemäßen Parcours. Ebenso bilden die Podeste 1, 2 mit jeweils einem aufliegenden Laufelement 4 ein Wegelement des erfindungsgemäßen Parcours.

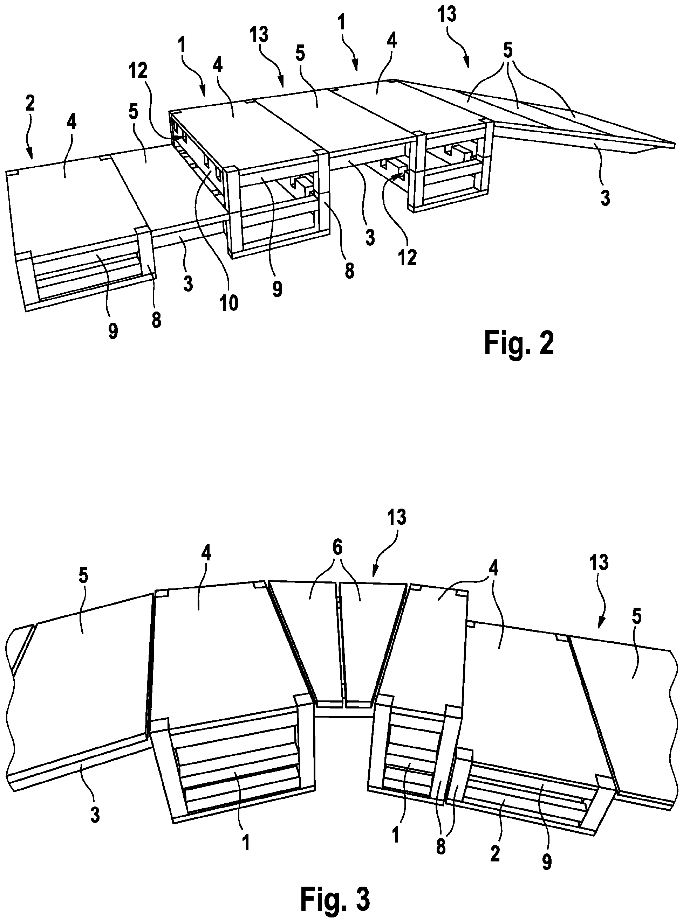

Figur 2 zeigt eine Möglichkeit, einen erfindungsgemäßen Parcours aus den in Figuren 1 gezeigten Elementen aufzustellen. Der Parcours weist ein niedriges und zwei hohe Podeste 1, 2 auf, die quer zu einer Längsrichtung des Parcours, parallel zueinander und mit Abständen voneinander aufgestellt sind. In die Aufnahmen 12 der Querträger 10 der Podeste 1, 2 sind Enden jeweils eines Paares gleich langer Längsträger 3 eingelegt, die die Abstände zwischen den Podesten 1, 2 überbrücken. Zwischen den beiden hohen Podesten 1 sind die beiden Längsträger 3 in die äußeren Aufnahmen 12 und zwischen dem niedrigen Podest 2 und einem der beiden hohen Podeste 1 sind die beiden Längsträger 3 in die inneren Aufnahmen 12 eingelegt. Auf die Längsträger 3 in den inneren Aufnahmen 12 ist ein Laufelement 5 längs und auf die Längsträger 3 in den äußeren Aufnahmen 12 ist ein Laufelement 5 quer angeordnet. Auf längere Längsträger 3 können in der Längsrichtung des Parcours hintereinander mehrere Laufelemente 5 hintereinander aufgelegt werden (nicht dargestellt). Die längs auf den Längsträgern 3 in den inneren Aufnahmen 12 angeordneten Laufelemente 5 bilden einen schmaleren und die quer auf den Längsträgern 3 in den äußeren Aufnahmen 12 angeordneten Laufelemente 5 einen breiteren Laufweg für das vierbeinige Tier, im Ausführungsbeispiel wie gesagt für ein Pferd.

Die Längsträger 3 und die Podeste 1, 2 mit den aufliegenden Laufelementen 4, 5 bilden die von einem vierbeinigen Tier, im Ausführungsbeispiel von einem Pferd begehbaren Wegelemente 13 beziehungsweise einen Laufweg des erfindungsgemäßen Parcours. Dabei bilden die Längsträger 3 mit den aufliegenden Laufelementen 5 Brücken oder Stege, die die Abstände zwischen den Podesten 1, 2 horizontal überbrücken. Von einem Boden, auf dem der Parcours aufgestellt ist, besteht eine Stufe zu dem niedrigen Podest 2. Von einem der beiden hohen Podeste 1 führen Längsträger 3 mit aufliegenden Laufelementen 5 als Rampe schräg nach unten zu dem Boden. Eine Enden dieser Längsträger 3 liegen in den Aufnahmen 12 des Querträgers 10 des Podests 1 ein und andere Enden dieser Längsträger 3 liegen auf dem Boden auf. Eine unterschiedliche Höhe zwischen zwei unterschiedlich hohen Podesten 1, 2 können mit einer Stufe oder ebenfalls durch schräg angeordnete Längsträger 3 mit aufliegenden Laufelementen 5 als Rampe überwunden werden.

Die Erfindung ist nicht auf die Aufstellung des Parcours gemäß Figur 2 begrenzt sondern die Elemente des Parcours lassen sich vielfältig anordnen.

Figur 3 zeigt einen erfindungsgemäßen Parcours mit den Elementen aus Figur 1, wobei hier zwei Podeste 1 in einem Abstand voneinander und schräg in einem Winkel zueinander aufgestellt sind. Der Abstand zwischen beiden Podesten 1 wird ebenfalls mit zwei Längsträgern 3 überbrückt, die allerdings unterschiedlich lang sind und deren Zapfen 16 schräg entsprechend dem Winkel zwischen den beiden Podesten 1 an den Enden der Längsträger 3 abstehen. Auf die Längsträger 3 sind zwei trapezförmige Laufelemente 6 aufgelegt. Diese Ausführung der Erfindung ermöglicht eine Richtungsänderung des Parcours.

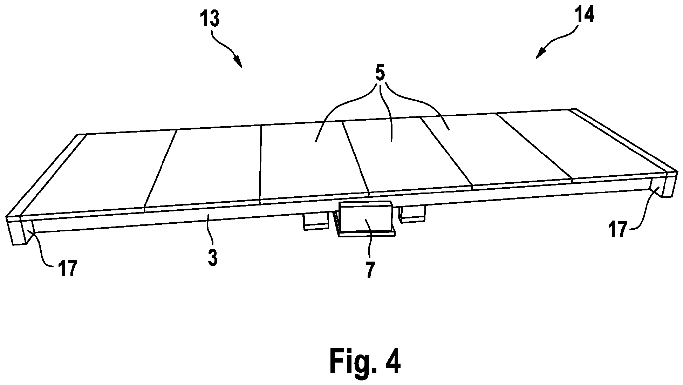

Figur 4 zeigt eine Wippe 14 des erfindungsgemäßen Parcours. Dazu sind auf die Wippstütze 7, die in Figur 1 als Einzelteil dargestellt ist, ein Paar gleich langer Längsträger 3 parallel zueinander gelegt, auf die Laufelemente 5 aufgelegt und mit den Laufträgern 3 verschraubt sind. An den Enden der Längsträger 3 sind Endstücke 17 angeordnet, die die Längsträger 3 in ihrem Abstand voneinander halten. Die Endstücke 17 sind Balken wie die Längsträger 3, die Aussparungen als Aufnahmen 12 für die Zapfen 16 an den Enden der Längsträger 3 aufweisen. Die Endstücke 17 sind beziehungsweise werden quer zu den Längsträgern 3 an den Enden der Längsträger 3 angeordnet. Die Wippstütze 7 weist Querbalken 15 mit quadratischem Querschnitt auf, der als Raute, das heißt mit einer Kante nach oben auf der Wippstütze 7 angeordnet ist. Auf der oberen Kante des Querbalken 15 sind die beiden Längsträger 3 mit den aufliegenden Laufelementen 5 als Wippe 14 schwenkbar gelagert.

Der erfindungsgemäße Parcours ist nicht nur vielseitig aufstellbar, sondern er ist von einer Person aufstellbar, abbaubar und transportfähig verladebar. Die Einzelteile des Parcours sind mit einem als PKW zugelassenen Kleintransporter, einem Transporter mit einem zulässigen Gesamtgewicht von 7,5 Tonnen, in einem Pferdeanhänger oder einem Anhänger vergleichbarer Größe transportierbar. Das heißt, der erfindungsgemäße Parcours ist modular und mobil.

## Patentansprüche

1. Mobiler, modularer Parcours für vierbeinige Tiere wie Hunde oder Pferde, insbesondere für Pferde, mit Wegelementen (13), die von dem Tier begehbar sind, und mit Stützen, die die Wegelemente (13) erhöht über einem Boden, auf dem die Stützen stehen, halten, wobei zu einem Transport des Parcours die Wegelemente (13) von den Stützen lösbar sind, **dadurch gekennzeichnet, dass** der Parcours selbststehende Podeste (1, 2) als Stützen aufweist, an denen die Wegelemente (13) lösbar befestigbar sind.

2. Parcours nach Anspruch 1, **dadurch gekennzeichnet, dass** der Parcours Podeste (1, 2) mit unterschiedlichen Höhen aufweist.

3. Parcours nach Anspruch 1 oder 2, **dadurch gekennzeichnet, dass** der Parcours Wegelemente (13) in unterschiedlichen Höhen über dem Boden aufweist.

4. Parcours nach einem oder mehreren der Ansprüche 1 bis 3, **dadurch gekennzeichnet, dass** die Wegelemente (13) einen Längsträger (3) aufweisen, der an zwei Podesten (1, 2) lösbar befestigbar ist, die in einem Abstand voneinander aufgestellt sind, den der Längsträger (3) überbrückt, und dass auf dem Längsträger (3) ein plattenförmiges Laufelement (5) aufliegt, das von dem Tier begehbar ist.

5. Parcours nach Anspruch 4, **dadurch gekennzeichnet, dass** auf den Längsträger (3) mehrere gleiche Laufelemente (5) hintereinander auflegbar sind, die den Abstand zwischen zwei Podesten (1, 2), an denen der Längsträger (3) befestigt ist, überbrücken.

6. Parcours nach Anspruch 4 oder 5, **dadurch gekennzeichnet, dass** der Parcours Längsträger (3) mit verschiedenen Längen aufweist, die wahlweise zur Überbrückung unterschiedlicher Abstände zweier Podeste (1, 2) verwendbar sind.

7. Parcours nach einem oder mehreren der vorhergehenden Ansprüche, **dadurch gekennzeichnet, dass** zwei Enden eines Wegelements (13) lösbar in unterschiedlichen Höhen an zwei Podesten (1, 2) befestigbar sind.

8. Parcours nach einem oder mehreren der vorhergehenden Ansprüche, **dadurch gekennzeichnet, dass** die Podeste (1, 2) räumliche Fachwerke aufweisen.

9. Parcours nach einem oder mehreren der vorhergehenden Ansprüche, **dadurch gekennzeichnet, dass** die Wegelemente (13) zwei nebeneinander angeordnete Längsträger (3) und die Podeste (1, 2) Paare von Aufnahmen (12) für die Längsträger (3) in unterschiedlichen Abständen aufweisen.

10. Parcours nach Anspruch 9, **dadurch gekennzeichnet, dass** ein Laufelement (5) längs für einen schmales Wegelement (13) und quer für eine breites Wegelement (13) auf zwei Längsträger (3) auflegbar ist.

11. Parcours nach einem oder mehreren der vorhergehenden Ansprüche, **dadurch gekennzeichnet, dass** ein Wegelement (13) zueinander schräge Enden aufweist, das lösbar an zwei schräg zueinander und in einem Abstand voneinander aufgestellten Podesten (1, 2) befestigbar ist.

12. Parcours nach einem oder mehreren der vorhergehenden Ansprüche, **dadurch gekennzeichnet, dass** der Parcours eine Wippstütze (7) aufweist, auf die ein Wegelement (13) als Wippe (14) auflegbar ist.
